# EUROPEAN PATENT APPLICATION

(11) **EP 0 599 109 A1**
(43) Date of publication of application: **01.06.1994**
(21) Application number: 93117878.4
(22) Date of filing: 04.11.1993
(51) Int. Cl.: B60J 7/00

(54) **A solar panel for vehicles, for example motor cars, a vehicle provided with the panel, and a method for the installation thereof**

(30) Priority: 24.11.1992 IT TO920947
(71) Applicant: FIAT AUTO S.p.A., I-10135 Torino (IT)
(72) Inventor: Palazzetti, Mario, I-10051 Avigliana (Torino) (IT); Salotti, Gianfranco, I-10051 Avigliana (Torino) (IT)
(74) Representative: Bosotti, Luciano

(57) **Abstract**

The solar panel (1) is formed in a manner such that it can make use of the arrangements provided in a car for a so-called sunroof which is intended to close a respective hole (A) in the roof (T) of the vehicle (C). It is thus possible to produce an inexpensive component which is easy to fit and has optimal aesthetic characteristics.

## Description

The present invention relates in general to solar panels and, in particular, addresses the problem of installing such a panel in a vehicle such as a motor car.

The installation of solar panels such as panels comprising a plurality of photovoltaic cells in motor vehicles such as motor cars has already been proposed in the past with the intention of providing a further energy source in the vehicle for supplying, for example, systems for ventilating the passenger compartment, and the battery.

Naturally, in order to provide an appreciable amount of energy, it is important for the panel to be of a considerable size which means that the selection to fit the panel in the roof of the vehicle is preferable from various points of view.

However, this solution, which is advantageous from the operative point of view, conflicts with both aesthetic and functional requirements.

For example, the panel may be fitted on a structure substantially comparable to a kind of parcel rack fixed on the roof of the vehicle: it goes without saying that this solution is not aesthetically pleasing and adversely affects the aerodynamic characteristics of the vehicle.

It is also possible to consider producing the panel in the form of a fairly thin, flexible sheet (which is permitted by current technology) and then laying the panel on a portion of the vehicle roof, fixing it in position, for example, by gluing. This solution also gives rise to difficulties, however, both because, although the panel is thin, it nevertheless constitutes a kind of covering which is applied to a portion of the roof and projects upwards, adversely affecting appearance and aerodynamics, and because the gluing to the roof is difficult both in terms of strength and as regards the need to exert a certain pressure on the panel at the gluing stage with a consequent risk, having regard to the size of the panel to be fitted, of deforming the underlying roof which is usually made of easily-deformable sheet metal.

At least in principle, one could consider overcoming the problems mentioned above by forming a recessed portion in the roof for housing the panel which could then be held firmly in position without projecting from the outer envelope of the vehicle.

However, like the other possible solutions, this latter solution gives rise to a production problem, i.e. making it necessary to produce suitably modified bodywork elements (specifically the element or elements defining the roof) for the cars which are to receive solar panels on their roofs. This conflicts with the usual need for standardisation in the automotive industry with a view to mass production.

The object of the present invention is therefore to provide a solution for the fitting of a solar panel on the roof of a vehicle which can satisfy the requirements mentioned above in an excellent manner without giving rise to any of the problems mentioned above.

According to the present invention, this object is achieved by virtue of a solar panel having the specific characteristics recited in the following claims. The invention also relates to a vehicle provided with such a solar panel and to a method for the installation thereof.

In summary, the present invention is based on the recognition of the fact that a large number of the vehicles, particularly the motor cars, currently produced are already arranged for the installation of an openable window (a so-called "sunroof") in the roof, usually above the front seats in the passenger compartment. In fact, many motor cars already have sunroofs as standard equipment, whereas for others it is possible to order and to purchase either a version with a closed roof or a version with a sunroof: in order to satisfy these requirements of the public, which correspond to a well-established taste, the automotive industry is equipped at production-line level (and in most cases in a fully automated manner) for selectively producing motor cars (more particularly, motor-car bodies) in which the roof already normally has an opening for the fitting of the sunroof. According to the present invention, this opening is actually used for the fitting of the solar panel.

The invention will now be described, purely by way of non-limiting example, with reference to the appended drawings, in which:
Figure 1 shows schematically a motor car with a solar panel according to the invention, and
Figure 2 is a theoretical, vertical, sectional view showing the arrangement in which a solar panel according to the invention is fitted in a motor-car roof.

In the drawings, a vehicle such as, for example, a motor car, is generally indicated C.

More precisely, this is a motor car arranged for the fitting of a so-called "sunroof".

In other words, the roof (or roof panel) T of the bodywork of the motor car C already has an opening A (usually of rectangular shape, disposed above the front seats in the passenger compartment of the motor car) for the fitting in the roof of a panel or "sunroof" (for example, of transparent material) which can selectively be moved between a closed position, in which the sunroof closes the opening A, and one or more (fully or partially) open positions, in which the sunroof leaves the opening A open to a greater or lesser extent. This is all according to widely known criteria which do not need to be described in detail herein.

In particular, the assembly lines for vehicles (particularly motor cars) in which sunroofs are to be fitted (in all the cars, or at least in some models) are already arranged automatically to fit a roof element with an opening A during the assembly of the body of the motor car C.

The panel 1 according to the invention may be constituted by a solar panel such as, for example, a photovoltaic panel having a front face 2 (more correctly, an upper face, in use) with a covering of photovoltaic cells such as, for example, monocrystalline photovoltaic cells.

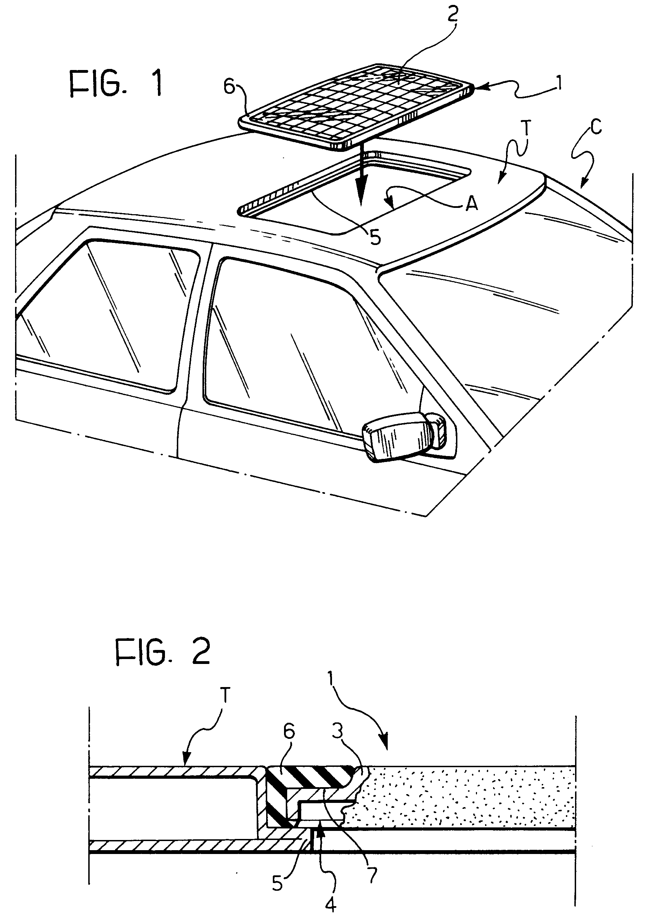

Such a panel may be produced, according to known technology, by the assembly (Figure 2) of a front or active panel 3 in which the photovoltaic cells are disposed and a rear, generally opaque panel 4 formed, for example, by the material known by the trade name of Tedlar. More precisely, the front panel (or rather the upper panel in its normal fitted position) has an outer surface formed of a material such as, for example glass. This solution nevertheless enables the panel 1 to be formed so as to have general characteristics of flexibility.

The characterising feature of the panel 1 formed according to the invention is that it is formed so that it can fit precisely in the opening A in the roof T of the vehicle C according to the general criteria provided for and illustrated in Figure 2.

The opening A usually has formations (indicated 5 in Figure 2) with stepped profiles at least along its sides, for ensuring a certain degree of sealing (particularly against water) with respect to the panel defining the sunroof. In fact, there is generally an internal gutter along the outline of the opening for collecting water.

The panel 1 is positioned in the opening in an arrangement completely identical to that used for the positioning of the panel defining the sunroof (naturally in the position corresponding to the closure of the sunroof).

A seal may be formed between the outer edge of the panel 1 and the outline of the opening A, for example, by means of a lipped weatherstrip 6 usually including a portion which is intended to be kept vertical in use, in a position intermediate the outer edge of the panel 1 and the inner vertical edge of the opening A, and a horizontal portion, which projects slightly onto the upper face of the panel 1 which may be formed with a peripheral recess 7 for this purpose.

As can best be appreciated from Figure 2, the upper surface of the solar panel 1 can thus be made absolutely coplanar (that is, "flush") with the outer surface of the roof T of the motor car and thus does not adversely affect its aerodynamics or its appearance.

Moreover, the installation and firm restraint of the solar panel 1 are also greatly facilitated since the panel 1 is fitted in an opening which houses it and the walls of which have a lateral restraining effect on its periphery. Thus, this considerably facilitates the firm and secure restraint of the panel 1 in its fitted position. The availability of the opening A also facilitates the insertion and the passage of the electrical connecting wires (not visible in the drawings) between the panel 1 and the electrical system of the motor car and/or the equipment used, which is supplied by the panel.

The solution according to the invention is suitable primarily for the installation of the solar panel 1 in the motor car C as original equipment, that is, during the manufacture of the motor car.

In this case, the motor cars (more precisely, the bodies) which are arranged for the fitting of sunroofs can be used directly for the installation of the solar panel 1 without the need to modify the roof elements of the bodies. The panel 1 in fact constitutes an independent component which already has the weatherstrip 6 around its periphery and which can be fitted easily by being introduced into the opening A vertically downwardly from above.

Naturally, the solution according to the invention is also suitable for use in the so-called "after market": in fact the owner of a motor car which has a sunroof might consider replacing the sunroof with a solar panel. In this case, the solar panel 1 can easily be fitted without the need for particular modification or adaptation of the motor car.

Moreover, at least in principle, another possibility is to leave usage completely up to the motorist who, at least in some seasons of the year could replace the panel defining the sunroof with the solar panel 1 and then remove the solar panel again and re-establish the function of the sunroof.

The solution according to the invention also enables the panel to be replaced easily if it is damaged or deteriorates in use.

## Claims

1. A solar panel (1) for vehicles (C), characterised in that it is constituted substantially by a panel-shaped body which can be housed in the opening (A) provided in the roof (T) of the vehicle (C) for the installation of a so-called sunroof.

2. A panel according to Claim 1, characterised in that it is a photovoltaic panel (2).

3. A panel according to Claim 1 or Claim 2, characterised in that the panel has a weatherstrip (6) around its periphery.

4. A panel according to Claim 3, characterised in that it has a recess (7) around its periphery for at least partially housing the weatherstrip (6).

5. A vehicle (C), characterised in that it has a roof (T) with an opening (A) for the fitting of a so-called sunroof, and in that a solar panel (1) according to any one of Claims 1 to 4 is housed in the opening (A).

6. A method of producing a vehicle (C) having at least one solar panel (1) fitted in its roof, characterised in that it comprises the steps of:
- producing the bodywork of the vehicle (C) as bodywork having an opening (A) in the roof (T) for the installation of a so-called sunroof,
- producing the solar panel (1) in the form of a panel-shaped body which can be housed in the opening (A), and
- fitting the panel (1) in the opening (A).
